# EUROPEAN PATENT SPECIFICATION

(11) **EP 0 510 043 B1**
(45) Date of publication and mention of the grant of the patent: **13.11.1996**
(21) Application number: 91901917.4
(22) Date of filing: 10.12.1990
(51) Int. Cl.: F16M 5/00

(54) **FOUNDATION AND METHOD PREPARING OR REPARING SAME**
MASCHINENSOCKEL UND VERFAHREN ZUM VERFERTIGEN ODER ZUM AUSBESSERN EINES SOLCHEN
SOCLE ET PROCEDE DE PREPARATION OU DE REPARATION D'UN SOCLE

(30) Priority: 11.12.1989 US 449608
(43) Date of publication of application: 28.10.1992
(73) Proprietor: WELCH-SLUDER IP PARTNERS, Houston, Texas (US)
(72) Inventor: WELCH, William, L., Houston, TX 77065 (US); SLUDER, Don, W., West Columbia, TX 77486 (US); HILL, Wallace, P., Deerpark, TX 77536 (US)
(74) Representative: Baillie, Iain Cameron
(86) International application number: US9007270
(87) International publication number: WO9109249

(56) References cited:
- GB-A- 2 071 635
- US-A- 2 240 427
- US-A- 2 802 632
- US-A- 2 916 233
- US-A- 2 998 216
- US-A- 3 654 018
- US-A- 3 788 581
- US-A- 3 953 029
- US-A- 4 632 346
- US-A- 4 670 208
- US-A- 4 731 915
- US-A- 4 826 127

## Description

### Field of the Invention

The present invention is directed to a form made of an aggregate filled thermosetting resin or a thermoplastic resin which is used to prepare or repair a machine foundation such as a foundation for a pump.

### Background of the Invention

Bases for equipment such as pumps have been preformed and designed for specific purposes such as to collect leaking liquids as illustrated by U.S. Patent 2,916,233. It uses a pressed steel plate including a central depressed portion of an inclined top surface, and surrounding short vertical walls. Marginal flange outwardly extends from the bottom ends of the vertical walls. It is designed for collection of leaking liquids of the pump, and not corrosion resistant. In application, the pump base is fixed on the ground by bolts applied on the marginal flange. Then, the grout or similar material is filled into the cavity of the base through holes formed on the inclined top surface for supporting the base. Molds have been used to cast a reusable foundation for a pump jack as disclosed in U.S. Patent 2,998,216.

Machine bases have used corrosion resistant materials such as disclosed In U.S. Patent 4,632,346 and U.S. Patent 4,731,915. In each of these patents epoxy materials are disclosed.

U.S. Patents 4,670,208 and 4,826,127 disclose a method of manufacturing machine supports from acrylic concrete. These patents disclose various machine supports made from mixtures of aggregates and methacrylate monomer being poured into a prepared mold.

U.S. Patent 3,592,437 discloses a pan-shaped structural concrete form made of resin impregnated fiberglass provided with an internal framework acting to brace the top and sides of the pan. The forms are placed upside down and arranged side by side on a wooden deck. Concrete is then poured on the forms and fills the intervals therebetween and over the top of the forms, thereby producing a concrete floor with a waffle-like underside. After the concrete sets, the wooden deck is removed exposing the bottom of the pan-shaped forms which are then pulled down from the underside of the concrete floor. A small hole in the top of each pan-shaped form is unplugged and air under pressure is introduced through the hole to further assist in easy separation of the form from the underside of the set concrete floor.

None of the prior art patents disclose a hollow form made of an aggregate filled thermosetting resin or a thermoplastic resin which has vertical walls of a height and spaced apart so as to encompass upstanding reinforcement rods and having at least one opening in a horizontal top wall of the form through which a fortifying material can be poured to surround the rods and fill the form to make a pump or other equipment foundation.

The present invention therefore provides a form adopted for easily producing a machine foundation by surrounding reinforcement rods extending vertically upward from a slab and adapted to secure the form to the slab in order to provide a flat surface for mounting a machine and its matching base thereon, said form being hollow and including vertical walls and a top wall that has at least one opening of sufficient size to receive a fortifying material poured into the form, characterized in that said form is made of a corrosion resistant material of one of an aggregate filled thermosetting resin or welded sheets of thermoplastic resin, said vertical walls being of sufficient height and sufficiently spaced to surround the vertically extending reinforcement rods, said top wall being a single horizontal wall of sufficient size overlying the top of said vertical walls to provide a horizontal, flat upper surface adapted to receive the base of said machine, and said horizontal wall having bolt openings for receiving bolts adapted for securing said machine to said horizontal wall.

The present invention also provides a machine foundation which has a single horizontal upper surface of sufficient size for mounting thereon a machine including its machine base, said foundation being formed on a slab and including a precast hollow form with vertical walls, in which a fortifying material is filled, characterized in that said machine foundation includes reinforcement rods which extend vertically upward from the slab, and the precast hollow form is made of a corrosion resistant material of one of an aggregate filled thermosetting resin or a preformed thermoplastic resin, said vertical walls being of sufficient height and sufficiently spaced to surround said vertically extending reinforcement rods and providing said single horizontal upper surface of said foundation, and said fortifying material filling any voids between said vertically extending reinforce methods, said vertical walls and said horizontal wall to secure said hollow form to the slab, thereby providing a unified supporting foundation for said machine.

Further, the present invention provides a method for repairing or preparing a machine foundation of corrosion resistance, said method characterized by the steps of enclosing an old foundation or a maze of reinforcement rods extended upward from a slab with a form made of material free from fluid attack selected from the group consisting of an aggregate filled thermosetting resin and thermoplastic resins and having vertical walls of sufficient height and sufficiently spaced to surround said maze or said old foundation, and a horizontal upper wall made of said material and overlying the top of said vertical walls and extending over said maze or said old foundation, and pouring a fortifying material into said form filling any voids between said reinforcement rods or old foundation, said vertical walls and said horizontal wall to secure said form to the slab or the old foundation, thereby providing a unified supporting foundation for said machine.

### Brief Description of the Drawings

Fig. 1 is a perspective view of the hollow form of the present invention positioned above a maze of reinforcement rods which together will create a machine foundation;
Fig. 2 is a perspective view of the hollow form of the present invention surrounding the maze of reinforcement rods and being filled with a setting, supportive material such as concrete;
Fig. 3 is a perspective view partly in cross-section of the finished machine foundation of the present invention;
Fig. 4 is a cross-sectional view of the finished machine foundation of the present invention;
Fig. 5 is a modification wherein there are two pieces to the form used in repairing a machine foundation, one of the pieces surrounding a degraded concrete base to be repaired and the second piece of the form which is shown about to be positioned around the degraded base;
Fig. 6 is another embodiment of the present invention wherein the form is made of a themoplastic resin such as polyethylene sheets welded together and having a welded maze of polyethylene rods affixed to the form; and
Fig. 7 is a cross-sectional view of the form illustrated in Fig. 6.

### Brief Description of the Preferred Embodiments

The present invention is directed to forms which are used either in the preparation or the repair of machine foundations. Machines such as pumps and other equipment are usually bolted to concrete bases to secure the machines in place. The present invention is directed to preparing or repairing a machine foundations with a precast, injection molded or welded form. By making the form from a material which will not be attacked by the materials handled by the machines such as the liquid being pumped by a pump or by the lubricating fluids such as oils or greases, the life of the machine foundation may be extended and the foundation may be kept more easily in repair. A material which is free from fluid attack is meant herein as a material which is not absorbent, is corrosion resistant, will not react with the fluids in the machine and will retain structural integrity and is either an aggregate filled thermosetting resin or a themoplastic resin. Further, by making the machine foundation from a material that is not subject to attack and has a surface that can be cleaned, overcomes the significant disadvantages of ordinary portland cement concretes. Ordinary concretes absorb the fluids, often times to substantial levels within the base or foundation. Ordinary concretes, in the case of leaks or spills, will require the removal of the contaminated concrete and in the case of hazardous materials pose a problem to any cleaning procedures for cleaning the base or foundation.

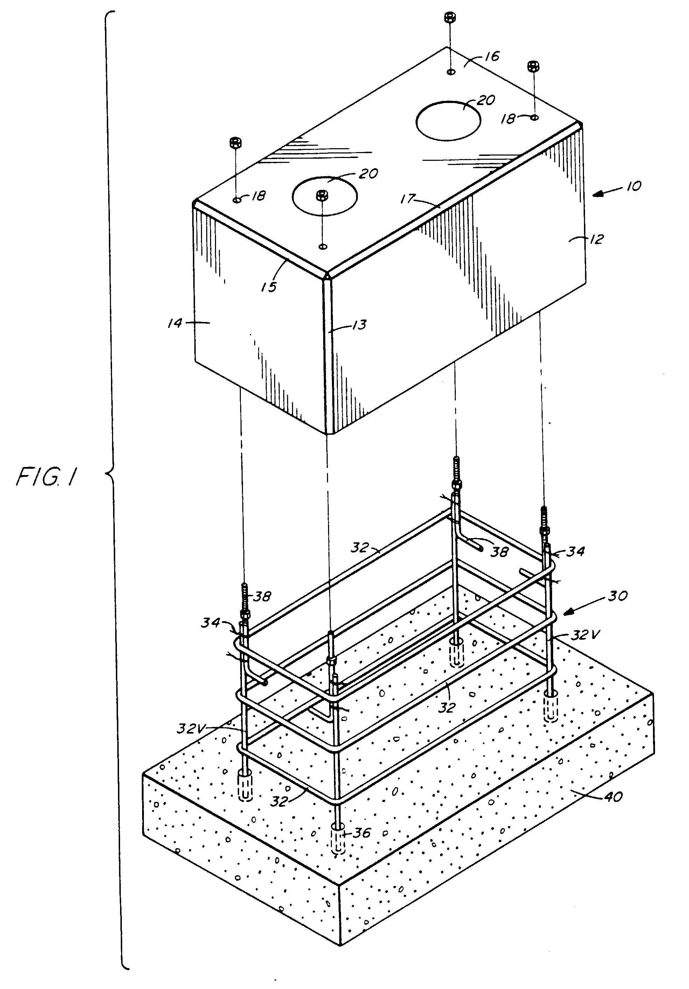

Referring now to Fig. 1, a hollow form 10 which is the preferred embodiment of the present invention for preparing a machine foundation is shown. The form 10 is precast when made of an aggregate filled thermosetting resin or is either injection molded or welded when made from a thermoplastic resin as will be described in more detail hereinafter. A specific example of a thermosetting resin is an epoxy based polymer concrete which utilizes select graded and blended aggregates suspended in a polyamine cured epoxy binder which is sold under the tradename "PC-1400" a product of Gulf Coast Paint Manufacturing in Mobile, Alabama. Another example of a thermosetting resin which exhibits Particular resistance to attack by chlorinated solvents and polar solvents is a novalac based polymer concrete which is sold under the tradename "EN-27", a product of Koch Corrosion Control in Houston, Texas. Still another example of a thermosetting resin which exhibits particular resistance to attack by organic acids as well as a wide range of inorganic acidic and alkaline materials is a vinyl ester based polymer concrete which is sold under the tradename "SEMSTONE 884", a product of Sentry Polmers in Freeport, Texas. These specific examples are but a few of the commercially available thermosetting resins made by these manufacturers and by other manufacturers. The form 10 has vertical walls and in its preferred configuration is rectangular, has side walls 12 and end walls 14. The form 10 has a single horizontal wall namely upper wall 16. The form 10 has no lower horizontal wall and is hollow. The wall thicknesses may vary from 1.3 cm (1/2 inch) to 3.8 cm (1 1/2 inches) in thickness. A form 10 may be made in any number of configurations and sizes but for most pieces of equipment, primarily for pumps and smaller pieces of equipment, such machines will easily fit on a form 10 where the top horizontal wall 16 is rectangular and has dimensions for example of 122 cm (4 feet) along the side walls 12 and 61 cm (2 feet) along the end walls 14. The height of the form 10 is sufficient to encompass any reinforcing structure used to construct or repair the machine foundation. The height therefore may be as little as 15 cm (6 inches) or up to 61 cm (2 feet) or greater. The horizontal or upper wall 16 of form 10 may have a plurality of bolt openings 18 and has at least one opening 20. As shown in Fig. 1, the form 10 has two openings 20, which are used to fill the form 10 as will be described in more detail hereinafter.

In preparing a new machine foundation, the ground is leveled and a concrete slab 40 may be poured. Foundations and bases for machines such as pumps and the like have used ordinary portland concrete. However, such concrete is porous and subject to attack by fluids in the machines or equipment. In preparing a new foundation according to the present invention, the outside surface of the slab 40 or the entire slab is a polymeric concrete to provide a surface which is washable and not absorbent to the fluids used or moved in the machines. The slab 40 is poured to support a reinforcement maze 30 of reinforcement rods. As shown in Fig. 1, slab 40 may be much larger than the horizontal dimensions of form 10 or may be essentially the same size or even smaller so that the form 10 surrounds the slab 40. Reinforcement rods 32V which extend vertically are set by anchors 36 in the slab 40. These anchors 36 may be epoxy resins or mixtures which fill the drill holes or are mechanical wedges which anchor the reinforcement rods 32V into the slab 40. As shown in Fig. 1, there are four, for purposes of illustration, vertically extending rods 32V. To these vertical rods are attached the plurality of horizontal reinforcement rods 32 to form the reinforcement maze 30. The reinforcement rods 32 are connected together in the usual manner with tying wire 34 to form the maze 30. The maze 30 is constructed to provide strength and reinforcement to the material which will surround the maze 30 and provide the strength and support necessary for the machine. As an example of a complete foundation, tie down bolts 38 may be attached to the maze 30 for securing the machine to its foundation. As shown in Fig. 1, four tie down bolts 38 are supported by maze 30 and will bolt down a particular machine. The form 10 is lowered from the position shown in Fig. 1 to surround the maze 30 and permit the tie-down bolts 38 to pass through the respective openings 18 in form 10. The form 10 sits on the slab 40 with the tie-down bolts 38 extending above the horizontal upper wall 16.

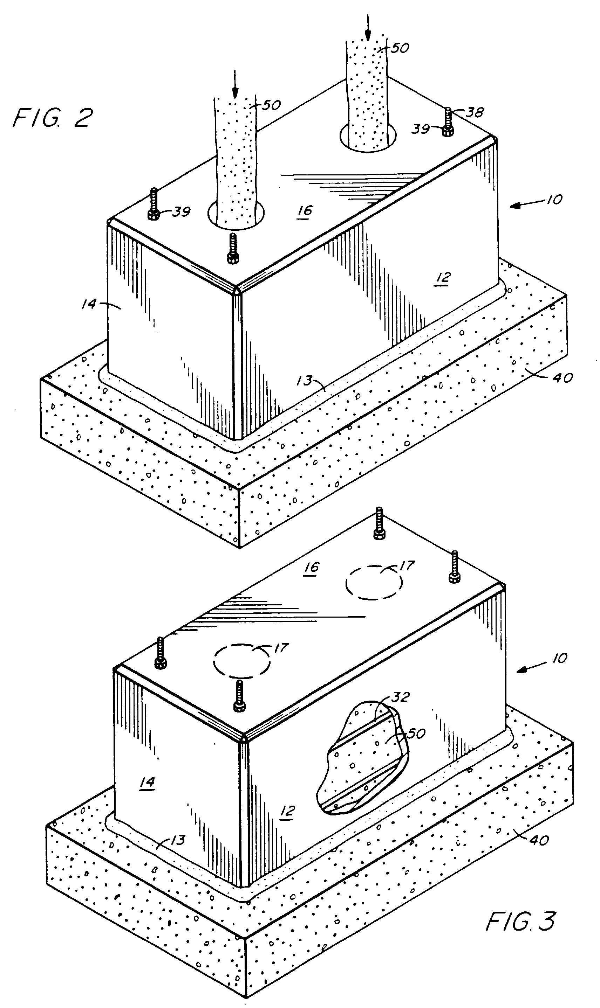

The form is now in the position as shown in Fig. 2. A bead 13 of polymeric concrete is placed around the lower edge of form 10 to seal the form 10 to the slab 40. This bead 13 may be on the inside or outside of form 10. Since the machine foundation is constructed for a specific machine, the number and spacing of the tie down bolts 38 is predetermined or known for that specific machine. It is understood therefore that alternatively rather than the number and spacing of bolt openings 18 being part of producing the form 10, i.e. formed in the precast mold or injection molding operation, for example, the bolt openings 18 may be drilled into the horizontal wall 16. The use of a template having the spacing and number of openings 18 may be used. Then, instead of the tie down bolts 38 being affixed to the maze 30, the bolts 38 may be affixed to the form 10 by nuts 39. In this position (Fig. 2), a fortifying material 50 which will fill the form 10 is poured into openings 20 of the form 10 which surrounds the maze of reinforcement rods 32 and produces a reinforced concrete structure.

The fortifying material 50 used to fill the form 10 is a material which can be easily poured into the form 10 and surround the maze 30, which has fast setting properties, and which has very little shrinkage upon setting. The preferred fortifying materials are the polymer concretes as illustrated by the epoxy based polymer concretes which have all the desired properties. These epoxy based polymer concretes are commercially available from a number of sources. A specific example is epoxy based polymer concrete which utilizes select graded and blended aggregates suspended in a polyamine cured epoxy binder which is sold under the tradename "PC-1400" a product of Gulf Coast Paint Manufacturing in Mobile, Alabama. One of the advantages of using a polymer concrete is that the concrete does not shrink upon setting and another is that the same material is used as the fortifying material as used in making the form 10. The compressive strength of these commercially available polymer concretes are within the range of 1050 to 1400 kg/cm² (15,000 to 20,000 psi). The finished base is shown in Fig. 3.

The form 10 may be made or constructed of various thermosetting or thermoplastic materials. When thermosetting resins are the material of construction the form 10 is preferably precast, while when thermoplastic resins are used injection molding or welding are the preferred manner of construction. Thermosetting resins are such materials as the epoxy resins and the multicomponent epoxy resins, the styrene butadiene latexes, the acrylic latexes, the phenolic epoxy resins, the polyurethane resins, the polyester resins, the vinyl ester resins and the like. In using the thermosetting materials they are often used in combinations as well as being aggregate filled. By aggregate filled is meant that materials such as sand or rock such as silica or other mineral based solids or materials such as flint quartz, glass, fibers or other materials, such as a sheet of fiber glass or the like, are added to the thermosetting resins as fillers to increase strength. These aggregate filled thermosetting materials are already used as materials to top or restore concrete surfaces and are known material for such use. According to the present invention however, a form 10 as described hereinabove is produced by casting these materials in the shape desired to form or repair a machine foundation. On the other hand, if thermoplastic resins are employed to produce the form 10 then materials such as the polyolefins, specifically high density polyethylene or polypropylene, polyvinylchlorides or polycarbonates or even materials such as the polyesters, polyethersulfones, polyether ketones or polyether imides are used. These thermoplastic materials are preferably injection molded to produce the form 10.

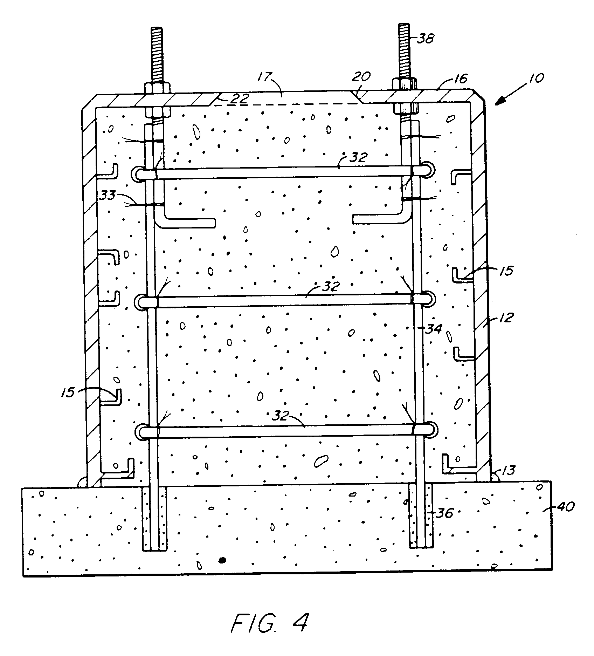

There are features of the form 10 which are optional and two of which are shown in Fig. 4. Internal of wall 12 and wall 14 may be a plurality of angle pieces 15 which provides a surface for the fortifying material 50 to compress and retain the frame 10 on the slab 40. Moreover, the piece 15 provides for an integral structure between the form 10 and the material 50 which fills the form 10. A further detail is in regard to the opening 20. In a precast form 10 when made of a thermoplastic material, the opening 20 may have a tapered surface 22, tapered from a smaller diameter at the top surface to a larger diameter at the bottom surface of top wall 16. After the setting material 50 fills the form 10 up to the bottom surface of horizontal wall 16, a layer of aggregate filled thermosetting resin 17 which preferably is the same material used to precast the form 10, is used to close the opening 20. On the otherhand, the openings 20 of an injection molded form 10 may be formed for a cap, either a screw or snar cap to close the opening. Further as shown in Fig. 4, nuts 59 may be used on the tie down bolts 38 above and below the wall 16. As shown in Fig. 1, after the form 10 is positioned a person can place a hand in the opening 20 and adjust the tie down bolts 38 so that they are properly positioned on the lower surface of upper wall 16 before the setting material 50 is introduced into the form 10. The opening 20 is preferably large enough to insert a tool to make certain that the setting material 50 completely fills the form 10.

An optional feature of form 10 (not shown) is that when the form has a substantial dimension, for example is over 183 cm (6 feet) long that baffles or internal walls will provide small compartments to be filled rather than a single or the total hollow space. The baffled compartments are to insure that cavities or voids will not occur in the fortifying material 50 and that shrinkage is minimized.

Referring to Fig. 4, a cross-section of the finished machine foundation is shown. The form 10 is sitting on a slab 40 and provides the base for the machine. The maze 30 has vertical bars 32V anchored in anchors 36 in the slab 40. The maze 30 is made up of a plurality of rebars or reinforcement rods 32. Inside the form 10 is fortifying material 50. The tie-down bolts 38 are secured to the upper horizontal wall 16 of the form 10 in the proper position for the machine.

Figs. 1 to 4 not only depict a preferred embodiment of a hollow form 10 of the present invention, especially when the form is made from a thermosetting resin, which provides a fluid resistant machine base but also provides the basis for describing an easy method for preparing a machine foundation according to the present invention. The form 10, made from an aggregate filled thermosetting resin or thermoplastic resin, is brought to the site. The slab 40 is laid and the maze 30 erected. The form 10 is set in place. It should not be overlooked how easy these steps are as contrasted to attempting to construct in the field a foundation free from fluid attack. Most forms 10 of the present invention can be set in place by one man or no more than two simply by lifting and setting the form 10 in place. The form 10 optionally may be sealed with a bead 13 of the polymeric concrete used in making the form 10 or if the form 10 is a polyolefin such as high density polyethylene for example, the sealing material may be an epoxy based material. After making certain that the tie down bolts 38 are affixed to the upper surface of the form 10 and adjusted for the machine, fortifying material 50 is added to fill the form 10 to a point or level above the lowest angle pieces 15. Preferably, this amount of material 50 will compress the form 10 on the slab 40 and then is allowed to set so that leaksge, if any, may be spotted and corrected before completely filling the form 10. The form 10 is then filled to the capacity of the hollow interior of the form 10. The opening 20 is closed either by using a layer of the aggregate filled thermosetting material when the form 10 is made of that material or by a cap if made from a thermoplastic material.

The present invention is illustrated by the following Example which includes the steps of making a form 10 from a thermosetting resin:

### EXAMPLE

I. Fabrication of 61 cm (2 feet) wide x 15 cm (6 inches) deep precast form of the present invention.
   1. A two-piece male-female mold is constructed of 2cm (3/4 inch) plywood which is reinforced with 5.1 cm (2 inch) x 10.2 cm (4 inches) boards attached to the sides and ends of the mold.
   2. A 25.4 cm (10 inches) circular plastic form is used to form a top opening.
   3. The interior surface of the female piece of the mold and the exterior surface of the male piece of the mold are first coated with five coats of paste wax with drying between successive coats. A final coat of crystalline silicone dispersed in trichloroethane is applied and allowed to thoroughly dry.
   4. A pourable polymer concrete material is prepared. A 100% solids cycloaliphatic amine cured phenolic epoxy resin manufactured by Gulf Coast Paint Manufacturing, Mobile, Alabama and sold under the tradename of "PC-1400" is mixed. An aggregate of flint quartz is added to the mixture of Base (Part A) and Hardener (Part B) which is mixed for approximately 1 to 2 minutes in a ratio of 1.5 to 2 parts Base to 1 part Hardener. The aggregate is slowly added until a uniform blend is achieved. The flint quartz has been chemically treated to develop an exceptionally strong bond with the resin.
   5. The polymer concrete is poured into the bottom of the female mold to a depth of one inch with care being taken to maintain the circular plastic form in position to form an opening.
   6. The male mold is then inserted and fitted with hold down braces to maintain wall thickness and prevent floating.
   7. The polymer concrete mixture is then poured into the space between the male and female molds while mechanical vibrators insure void-free complete filling of the mold.
   8. The completed assembly is allowed to cure over night before removal of the wooden mold.
II. Installation
   1. An existing steel pump base and pump are removed from an existing concrete pump foundation.
   2. Measurements are taken to determine the required elevation, longitude and latitude for setting a new pump base specifically the precast form and replacing the pump.
   3. Damaged and degraded areas of existing concrete pump foundation are removed by a pneumatic chipping gun.
   4. Existing pump anchor bolts may be lengthened and reused.
   5. Measurements are taken of the bolt hole pattern and marked on top of the precast form.
   6. Four holes are drilled through the top of the precast form using a 1.3 cm (1/2 inch) masonary drill bit.
   7. The existing concrete pump foundation and the interior and exterior of the precast form and dry abrasive blaster to clean and remove surface contamination.
   8. The precast hollow form is then placed over the existing pump foundation with the pump anchor bolts fitting through the pre-drilled holes in the top of the precast form.
   9. The precast form is held in place by nuts securely fastened to the pump anchor bolts.
   10. Polymer concrete is then prepared as was described in I-4 above and is poured into the formed hole in top of the precast form so that the space between the existing concrete pump foundation and the interior surface of the precast form is completely filled. Alternately, a non-shrinking, unexpanding cementatious grout may be used to fill the form.
   11. The hold down nuts are removed after allowing curing for one hour.
   12. The exterior of the precast form is then dry abrasive blasted and is top coated with a nominal 10-mil thick application of cycloaliphatic amine cured novolac epoxy manufactured by Gulf Coast Paint Manufacturing, Mobile, Alabama and sold under the tradename "PC-555".
   13. The pump is then installed on top of the filled precast form which creates a chemical resistant foundation.

The forgoing example illustrates a form 10 of the present invention made of a thermosetting resin. Specifically, the example included an epoxy resin but other thermosetting resins or composite materials may be used.

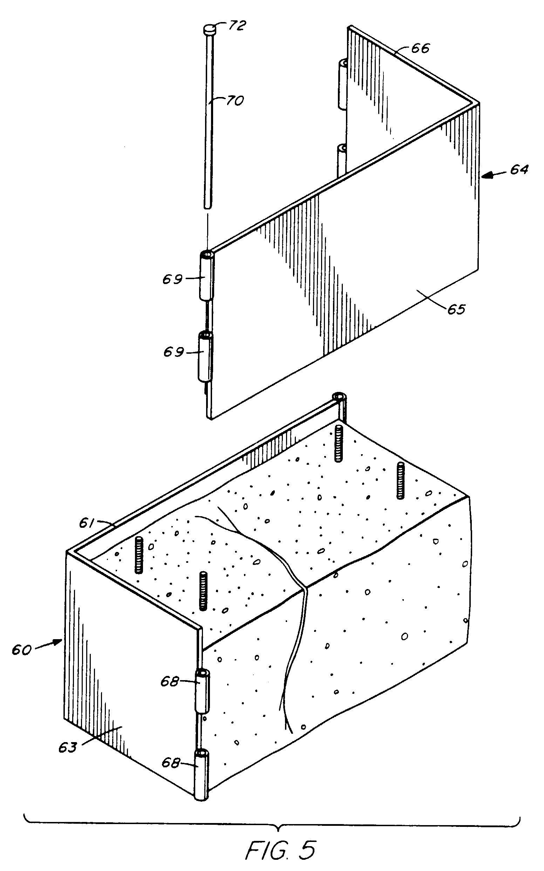

Referring now to Fig. 5 a modification may be employed to repair a cracked or degraded machine base. In this modification the hollow form is made from two forms having vertical walls made of either an aggregate filled thermosetting resin or thermoplastic resin which may be easily joined together to surround the existing degraded base. As depicted in Fig. 5 there are two vertical wall forms 60 and 64. Form 60 has a side wall 61 and an end wall 63. Comparable walls of form 64 are side wall 65 and end wall 67. Each of the forms 60 and 64 are provided with an easy attachment to each other such as tubular member 68 on end wall 63 and tubular member 69 on end wall 67. Through tubular members 68 and 69 a pin 70 is inserted to hold the two forms 60 and 64 together. The pin 70 has a large head 72 which will not fit through the tubular members 68 and 69 but secures form 60 and 64 in place around the degraded base. The precast forms 60 and 64 are placed around the slab one at a time and connected at both connecting edges. A sealing material such as an epoxy resin or suitable adhesive for the aggregate filled thermosetting resin or thermoplastic resin may be applied along the inner edges of form 60 and 62 where the two edges are connected by pins 70. It is understood that there are two connecting edges. Once the forms are in place the hollow form is filled with a setting material 50 similarly as form 10 substantially to the top of the form. As shown in Fig. 5, 82 depicts a fill level for the filling or pouring of fortifying material within the forms 60 and 64. The fortifying material is allowed to set and thereafter the form is then filled with a layer of the same material which was used in making the forms 60 and 64. When the fortifying material 50 is the same material used to make the forms 60 and 64 then the form is completely filled in one step. Again a completed foundation formed of a material free from fluid attack is thereby produced.

An alternative of the two-piece form 10 is to have a single form having the side walls 12 and 14 and a second, seperate top piece 16. This alternative is especially advantageous for repairing a large foundation such as a pump base. This permits that the side wall form of form 10 be place around an existing or repaired maze and having clear access to filling the area between the maze and the side wall form. The single horizontal wall 16 or top is placed on the form 10, after the tie down bolts have been set and the form substanially filled with fortifying material 50, and a layer of uncured thermosetting resin is applied to fill the form. The top 16 is pulled down by using the tie down bolts so that the excess of uncured resin is forced up the openings around the tie down bolts as well as openings 20.

The above examples illustrate that the form 10 may be constructed in the field with pieces being preformed.

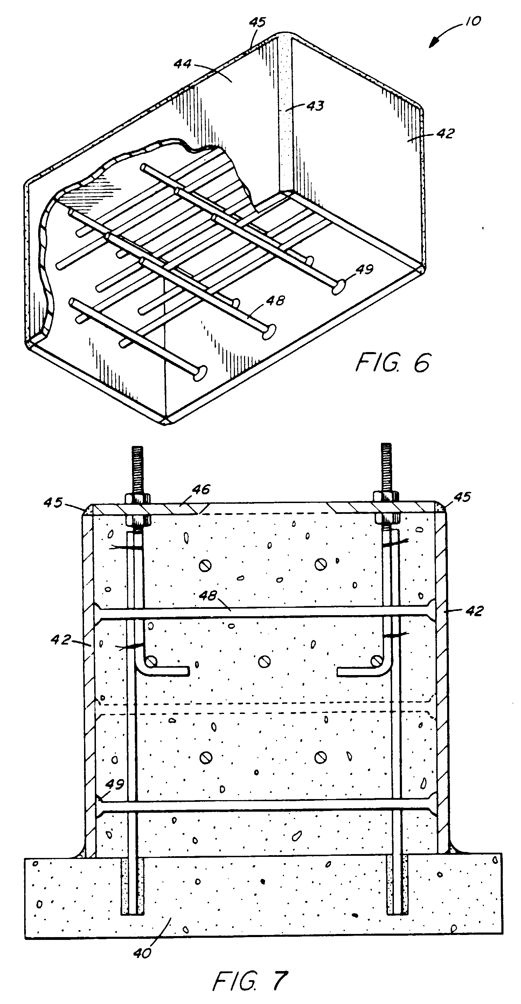

To construct a form 10 from a thermoplastic resin, specifically polyethylene, a simple and effective manner of making a form 10 is by welding sheets of the thermoplastic resin together. Referring to Figs. 6 and 7, side walls 42 and 44 of a form 10 may be made from sheets of polyethylene. Polyethylene is heated above its melting point and applied as a weld bead 43 to the adjoining edges of the sheets of polyethylene, for example, between side sheet 42 and sheet 44, welding the two sheets 42 and 44 together. In a like manner sheet 44 is joined to top sheet 46 by a bead 45 of polyethylene and top sheet 16 is joined to side sheet 12 by weld bead 47 (not shown). With this construction of the form 10 using a thermoplastic resin such as polyethylene, a form 10 may be made which is relatively light in weight yet sturdy and completely free from fluid attack. Various modifications are possible to secure the thermoplastic form 10 to the slab 40 while the fortifying material 50 is poured into the form 10. For example, pieces of sheet polyethylene may be welded to the bottom of form 10 and bolted to the slab 40.

A feature of a form 10 made from thermoplastic sheets as illustrated in Figs. 6 and 7 is that a maze, comparable to the maze 30, may be made internal of and a part of the form 10. Rods 48 of polyethylene or metal surrounded by polyethylene are cut and welded to the side walls either from side wall 42 to 42 or side wall 44 to 44. The weld beads 49 of polyethylene affix the rods 48 to the walls. The maze of rods 48 when surrounded by the fortifying material 50 which fills the hollow portion of the form 10 secures the form 10 to the slab 40. A fortifying material 50 such as a 210 kg/cm² (3000 psi) portland cement concrete, a material which is commonly used in pouring the slab 40, may be used to fill the form 10 and surround the rods 48 such as to assure that the form 10 is solidly affixed to the slab 40. A further example of fortifying material used with the thermoplastic resin form 10 and which has a slight expansion property is a product sold under the tradename "Supreme Expanding Grout", a product of Gifford-Hill in Houston, Texas.

The advantage of a expanding fortifying material 50 in a polyethylene form 10 is that the form will be under tension and thus a stronger more solid foundation is produced.

When the foundation is a solid, uniform structure, the tendency for vibrations in the machine placed on the foundation is reduced. A foundation having the form of the present invention made from a thmosetting resin and filled with a fortifying material such as a polymer cement which adhere together provides the strongest structural foundation possible and the vibrations in the machine placed on the foundation are reduced. Thus, not only is the foundation being made of materials free from fluid attack but the foundation of the present invention reduces vibrations in the equipment placed on the foundation, thus extending the life of the equipment as well as the foundation. Forms of the present invention will last for far longer periods of time than coated or normal portland concrete machine foundations.

Various modifications of the specific dimensions as well as the shapes or form of the forms of the present invention are within the scope of the present invention as defined by the claims.

## Claims

1. A form adopted for easily producing a machine foundation by surrounding reinforcement rods extending vertically upward from a slab and adapted to secure the form to the slab in order to provide a flat surface for mounting a machine and its machine base thereon, said form (10) being hollow and including verticle walls and a top wall that has at least one opening of sufficient size to receive a fortifying material poured into the form (10), characterized in that said form (10) is made of a corrosion resistant material of one of an aggregate filled thermosetting resin or welded sheets of thermoplastic resin, said vertical walls (12, 14) being of sufficient height and sufficiently spaced to surround the vertically extending reinforcement rods (32), said top wall being a single horizontal wall (16) of sufficient size overlying the top of said vertical walls (12, 14) to provide a horizontal, flat upper surface adapted to receive the base of said machine, and said horizontal wall (16) having bolt openings (18) for receiving bolts (38) adapted for securing said machine to said horizontal wall (16).

2. The form of claim 1, characterized in that said vertical walls are comprised of two side walls (12) and two end walls (14).

3. The form of claim 1 or 2, characterized in that said form (10) is precast in at least two pieces.

4. The form of claim 1, 2 or 3, characterized in that reinforcement rods (48) are welded to said vertical walls (42, 44) to produce a maze.

5. A machine foundation which has a single horizontal upper surface of sufficient size for mounting thereon a machine including its machine base, said foundation being formed on a slab and including a precast hollow form with vertical walls, in which a fortifying material is filled, characterized in that said machine foundation includes reinforcement rods (32) which extend vertically upward from the slab (40), and the precast hollow form (10) is made of corrosion resistant material of one of an aggregate filled thermosetting resin or a preformed thermoplastic resin, said vertical walls (12, 14) being of sufficient height and sufficiently spaced to surround said vertically extending reinforcement rods (32), a horizontal wall (16) made of said aggregate filled thermosetting resin or said thermoplastic resin, and being of sufficient size overlying the top of said vertical walls (12, 14) and extending over said vertically extending reinforcement rods (32) and providing said single horizontal upper surface of said foundation; and said fortifying material (50) filling any voids between said vertically extending reinforcement rods (32), said vertical walls (12, 14) and said horizontal wall (16) to secure said hollow form (10) to the slab (40),thereby providing a unified supporting foundation for said machine.

6. The machine foundation according to claim 5, characterized in that said horizontal wall (16) is a wall of said precast hollow form (10).

7. The machine foundation according to claim 5, characterized in that said horizontal wall (16) is separately precast.

8. The machine foundation according to claim 5, 6 or 7, characterized in that said vertical walls (60, 64) are precast in more than one piece.

9. The machine foundation according to claim 5, characterized in that said hollow form (10) is made from welded sheets (42, 44, 46) and the reinforcement rods (32) are preferably welded to said vertical walls (42, 44, 46) of said hollow form (10) to construct a maze.

10. A method for repairing or preparing a machine foundation of corrosion resistance, said method characterized by the steps of enclosing an old foundation or a maze of reinforcement rods extended upward from a slab with a form made of a material free from fluid attack selected from the group consisting of an aggregate filled thermosetting resin and thermoplastic resins and having vertical walls of sufficient height and sufficiently spaced to surround said maze or said old foundation, and a horizontal upper wall made of said material and overlying the top of said vertical walls and extending over said maze or said old foundation, pouring a fortifying material into said form filling any voids between said reinforcement rods or old foundation, said vertical walls and said horizontal wall to secure said form to the slab or the old foundation, providing a unified supporting foundation for said machine.

11. The method according to claim 10, characterized in that said form is precast in more than one piece.

## Patentansprüche

1. Form zur einfachen Erzeugung eines Maschinenfundaments durch umgebende Verstärkungsstangen, die sich von einer Platte senkrecht nach oben erstrecken, und wobei die Form an der Platte befestigt werden kann, um eine flache Oberfläche zur Anbringung einer Maschine und deren Maschinensockel vorzusehen, wobei die genannte Form (10) hohl ist und vertikale Wände sowie eine obere Wand aufweist, die mindestens eine Öffnung mit einer Größe aufweist, die zur Aufnahme eines in die Form (10) gegossenen Verstärkungsmaterials ausreicht, dadurch gekennzeichnet, daß die genannte Form (10) aus einem korrosionsbeständigen Werkstoff gestaltet wird, nämlich aus einem mit Aggregat gefüllten wärmehärtbaren Plast oder aus Schweißlagen aus thermoplastischem Harz, wobei die genannten vertikalen Wände (12, 14) eine derartige Höhe und einen derartigen Zwischenabstand aufweisen, daß sie die sich vertikal bzw. senkrecht erstreckenden Verstärkungsstangen (32) umgeben, wobei es sich bei der genannten oberen Wand um eine einzelne horizontale Wand (16) handelt, die eine ausreichende Größe zur Überlagerung der Oberseite der genannten vertikalen Wände (12, 14) aufweist, um eine horizontale, flache obere Oberfläche vorzusehen, die den Sockel der genannten Maschine aufnehmen kann, und wobei die genannte horizontale Wand (16) Bolzenöffnungen (18) zur Aufnahme von Bolzen (38) aufweist, wodurch die genannte Maschine an der genannten horizontalen Wand (16) angebracht werden kann.

2. Form nach Anspruch 1, dadurch gekennzeichnet, daß die genannten vertikalen Wände zwei Seitenwände (12) und zwei Stirnwände (14) umfassen.

3. Form nach Anspruch 1 oder 2, dadurch gekennzeichnet, daß die genannte Form (10) in mindestens zwei Teilen vorgefertigt wird.

4. Form nach Anspruch 1, 2 oder 3, dadurch gekennzeichnet, daß die Verstärkungsstangen (48) zur Erzeugung eines Labyrinths an die genannten vertikalen Wände (42, 44) geschweißt werden.

5. Maschinenfundament mit einer einzelnen, horizontalen oberen Oberfläche mit ausreichender Größe zur Anbringung einer Maschine mit deren Maschinensockel auf dieser Oberfläche, wobei das genannte Fundament auf einer Platte ausgebildet ist und eine vorgefertigte, hohle Form mit vertikalen Wänden aufweist, in die ein Verstärkungsmaterial gefüllt wird, dadurch gekenzeichnet, daß das genannte Maschinenfundament Verstärkungsstangen (32) aufweist, die sich von der Platte (40) vertikal nach oben erstrecken, und wobei die vorgefertigte, hohle Form (10) aus einem korrosionsbeständigen Werkstoff gestaltet wird, nämlich aus einem mit Aggregat gefüllten wärmehärtbaren Plast oder aus einem vorgeformten thermoplastischen Harz, wobei die genannten vertikalen Wände (12, 14) eine derartige Höhe und einen derartigen Zwischenabstand aufweisen, so daß sie die sich vertikal bzw. senkrecht erstreckenden Verstärkungsstangen (32) umgeben, eine horizontale Wand (16) aus dem genannten mit Aggregat gefüllten wärmehärtbaren Plast oder aus dem genannten thermoplastischen Harz, und mit ausreichender Größe zur Überlagerung der Oberseite der genannten vertikalen Wände (12, 14) und sich über die genannten, sich vertikal erstreckenden Verstärkungsstangen (32) erstreckend, und wobei die genannte einzelne, horizontale obere Oberfläche des genannten Fundaments vorgesehen wird; und wobei das genannte Verstärkungsmaterial (50) alle Hohlräume bzw. Lücken zwischen den genannten sich vertikal erstreckenden Verstärkungsstangen (32), den genannten vertikalen Wänden (12, 14) und der genannten horizontalen Wand (16) füllt, um die genannte hohle Form (10) an der Platte (40) zu befestigen, wodurch für die genannte Maschine ein kombiniertes, tragendes Fundament vorgesehen wird.

6. Maschinenfundament nach Anspruch 5, dadurch gekennzeichnet, daß es sich bei der genannten horizontalen Wand (16) um eine Wand der genannten vorgefertigten, hohlen Form (10) handelt.

7. Maschinenfundament nach Anspruch 5, dadurch gekennzeichnet, daß die genannte horizontale Wand (16) getrennt vorgefertigt wird.

8. Maschinenfundament nach Anspruch 5, 6 oder 7, dadurch gekennzeichnet, daß die genannten vertikalen Wände (60, 64) in mehr als einem Stück vorgefertigt werden.

9. Maschinenfundament nach Anspruch 5, dadurch gekennzeichnet, daß die genannte hohle Form (10) aus Schweißlagen (42, 44, 46) gestaltet wird, und wobei die Verstärkungsstangen (32) zur Gestaltung eines Labyrinths vorzugsweise an die genannten vertikalen Wände (42, 44, 46) der genannten hohlen Form (10) geschweißt werden.

10. Verfahren zur Instandsetzung bzw. Vorbereitung eines korrosionsbeständigen Maschinenfundaments, wobei das genannte Verfahren durch die folgenden Schritte gekennzeichnet ist:
Umschließen eines alten Fundaments oder eines Labyrinths aus sich von einer Platte nach oben erstreckenden Verstärkungsstangen mit einer Form aus einem fluidangriffsfreien Material, das aus der Gruppe ausgewählt wird, die mit Aggregat gefülltes wärmehärtbares Plast und thermoplastische Harze umfaßt, und mit vertikalen Wänden, die eine ausreichende Höhe und entsprechende Zwischenabstände aufweisen, so daß sie das genannte Labyrinth bzw. das genannte alte Fundament umgeben, und mit einer aus dem genannten Material hergestellten horizontalen oberen Wand, die die Oberseite der genannten vertikalen Wände überlagert und sich über das genannte Labyrinth bzw. über das genannte alte Fundament erstreckt; Gießen eines Verstärkungsmaterials in die genannte Form, so daß alle Zwischenräume zwischen den genannten Verstärkungsstangen bzw. dem alten Fundament, den genannten vertikalen Wänden und der genannten horizontalen Wand gefüllt werden, so daß die genannte Form an der Platte bzw. an dem alten Fundament befestigt wird, wodurch für die genannte Maschine ein kombiniertes tragendes Fundament vorgesehen wird.

11. Verfahren nach Anspruch 10, dadurch gekennzeichnet, daß die genannte Form in mehr als einem Teil vorgefertigt wird.

## Revendications

1. Forme destinée à la fabrication facile d'un socle de machine par enrobage de tiges d'armature dépassant verticalement au-dessus d'une dalle et destinées à fixer la forme à la dalle pour former une surface plate de montage d'une machine et de sa base de machine, la forme (10) étant creuse et ayant des parois verticales et une paroi supérieure qui a au moins une ouverture de dimension suffisante pour le passage d'un matériau de renforcement coulé dans la forme (10), caractérisée en ce que la forme (10) est formée d'un matériau résistant à la corrosion d'une résine thermodurcissable chargée d'un agrégat ou de feuilles soudées d'une résine thermoplastique, les parois verticales (12, 14) ayant une hauteur suffisante et étant suffisamment espacées pour qu'elles entourent les barres d'armature (32) placées verticalement, la paroi supérieure étant une paroi horizontale unique (16) de dimension suffisante pour qu'elle recouvre la partie supérieure des parois verticales (12, 14) en formant une surface supérieure horizontale plate destinée à supporter la base de la machine, la paroi horizontale (16) ayant des ouvertures (18) de passage de boulons (38) destinés à la fixation de la machine à la paroi horizontale (16).

2. Forme selon la revendication 1, caractérisée en ce que les parois verticales comportent deux parois latérales (12) et deux parois d'extrémité (14).

3. Forme selon la revendication 1 ou 2, caractérisée en ce que la forme (10) est préalablement coulée sous forme d'au moins deux pièces.

4. Forme selon la revendication 1, 2 ou 3, caractérisée en ce que les barres d'armature (48) sont soudées aux parois verticales (42, 44) afin qu'elles forment un labyrinthe.

5. Socle de machine ayant une seule surface supérieure horizontale de dimension qui suffit pour le montage d'une machine ayant une base de machine, le socle étant formé sur une dalle et comprenant une forme creuse préalablement moulée ayant des parois verticales et dans laquelle est chargé un matériau de renforcement, caractérisé en ce que le socle de machine comprend des barres d'armature (32) placées verticalement au-dessus de la dalle (40), et la forme creuse (10) préalablement moulée est formée d'un matériau résistant à la corrosion constitué d'une résine thermodurcissable chargée d'un agrégat ou d'une résine thermoplastique préalablement mise en forme, les parois verticales (12, 14) ayant une hauteur suffisante et étant suffisamment espacées pour entourer les barres (32) d'armature placées verticalement, une paroi horizontale (16) formée de la résine thermodurcissable chargée d'un agrégat ou de la résine thermoplastique et ayant une dimension suffisante pour qu'elle recouvre la partie supérieure des parois verticales (12, 14) et soit disposée au-dessus des barres (32) d'armature disposées verticalement tout en formant une surface supérieure horizontale unique du socle, et le matériau de renforcement (50) remplit les cavités formées entre les barres (32) d'armature disposées verticalement, les parois verticales (12, 14) et la paroi horizontale (16) afin que la forme creuse (10) soit fixée à la dalle (40) et forme ainsi un socle unitaire de support de la machine.

6. Socle de machine selon la revendication 5, caractérisé en ce que la paroi horizontale (16) est une paroi d'une forme creuse (10) préalablement moulée.

7. Socle de machine selon la revendication 5, caractérisé en ce que la paroi horizontale (16) est préalablement moulée de manière séparée.

8. Socle de machine selon la revendication 5, 6 ou 7, caractérisé en ce que les parois verticales (60, 64) sont préalablement moulées en plusieurs pièces.

9. Socle de machine selon la revendication 5, caractérisé en ce que la forme creuse (10) est constituée de feuilles soudées (40, 44, 46) et des barres d'armature (32) sont de préférence soudées aux parois verticales (42, 44, 46) de la forme creuse (10) pour la formation d'un labyrinthe.

10. Procédé de réparation ou de préparation d'un socle de machine qui résiste à la corrosion, le procédé comprenant les étapes suivantes : l'incorporation d'un socle ancien ou d'un labyrinthe de barres d'armature dépassant au-dessus d'une dalle à une forme constituée d'un matériau qui ne subit pas d'attaque par un fluide et est choisi dans le groupe formé par une résine thermodurcissable chargée d'un agrégat et des résines thermoplastiques, et ayant des parois verticales de hauteur suffisante et suffisamment espacées pour qu'elles entourent le labyrinthe ou le socle ancien, et une paroi horizontale supérieure formée dudit matériau et recouvrant la partie supérieure des parois verticales au-dessus du labyrinthe ou du socle ancien, la coulée d'un matériau de renforcement dans la forme pour le remplissage des cavités formées entre les barres d'armature ou le socle ancien, les parois verticales et la paroi horizontale étant destinées à fixer la forme à la dalle ou au socle ancien en formant un socle unitaire de support de la machine.

11. Procédé selon la revendication 10, caractérisé en ce que la forme est préalablement moulée en plusieurs pièces.
